# EUROPÄISCHE PATENTANMELDUNG

(11) **EP 4 113 799 A1**
(43) Veröffentlichungstag der Anmeldung: **04.01.2023**
(21) Anmeldenummer: 21182538.5
(22) Anmeldetag: 29.06.2021
(51) Int. Cl.: H02K 3/487, H02K 15/00

(54) **DECKSCHIEBER, VERFAHREN ZUR MONTAGE EINES DECKSCHIEBERS UND WERKZEUG ZUR DURCHFÜHRUNG DES VERFAHRENS**

(71) Anmelder: Siemens Aktiengesellschaft, 80333 München (DE)
(72) Erfinder: Bernhardt, Michael, 97616 Bad Neustadt (DE); Josiek, Vladislav, 73601 Havírov (CZ); Kirchner, Klaus, 97645 Ostheim (DE); Uherek, Jan, 73961 Trinec (CZ)
(74) Vertreter: Maier, Daniel Oliver

(57) **Zusammenfassung**

Die Erfindung betrifft einen Deckschieber, insbesondere zum Verschluss einer Nut eines Stators eines Elektromotors, wobei der Deckschieber als offenes Trapez aus einem Flächenisolierstoff gefaltet ist, und wobei der Deckschieber an seinem, in Einbringungsrichtung vorderen Ende ein Einrastelement für einen Mitnehmer aufweist.

Der erfindungsgemäße Deckschieber erleichtert und beschleunigt die Montage.

## Beschreibung

Die Erfindung betrifft einen Deckschieber, ein Verfahren zur Montage eines Deckschiebers und ein Werkzeug zur Durchführung des Verfahrens.

Elektrische Motoren weisen typisch einen sogenannten Stator mit einem hohlzylindrischen, magnetisch leitfähigen Körper auf, der auf einer seiner Mantelflächen im Wesentlichen axial verlaufende, teilgeöffnete Nuten aufweist, in denen Wicklungen angeordnet sind.

Beim Einziehen der Wicklungen in den Stator werden ebenfalls Flächenisolierstoffe mit in die Nuten eingebracht. Als Nutauskleidung dient hierbei ein sogenannter Nutkasten. Dabei handelt es sich um einen gefalzten Flächenisolierstoff, welcher mit seiner Querschnittsform an die Kontur der Nut angepasst ist und an der Nutwandung anliegt.

Die Nutauskleidung bildet dabei eine zusätzliche flächige elektrische Barriere zwischen dem Wicklungssystem, insbesondere zwischen den Kupferwicklungen aus Lackdraht und dem magnetisch leitfähigen Körper des Stators.

Nach dem Einzug der Wicklung wird der Nutschlitz mit einem Deckschieber verschlossen, welcher ebenfalls aus einem gefalzten Flächenisolierstoff besteht und zwei wichtige Funktionen aufweist. Zum einen realisiert man hiermit die notwendigen Luft- und Kriechstrecken, da sich Deckschieber und Nutkasten an den Rändern überlappen. Zum anderen verkeilt sich der Nutkasten mit dem Nutzahn und fixiert somit mechanisch die Wicklung in der Nut, so dass keine Einzeldrähte durch den Nutschlitz zurück in den Bereich des Luftspaltes oder des Rotors rutschen können.

Das Einbringen von Deckschiebern kann entweder manuell oder automatisiert erfolgen. Bei der manuellen Vorgehensweise wird der Deckschieber von der Statorstirnseite an der bereits mit einer Wicklung und einer Grundisolation bestückten Nut angesetzt und axial in die Nuten eingeschoben.

Bei einer teilautomatisierten Montage, wie sie beispielsweise aus der DE 26 30 183 A1 bekannt ist, wird der Deckschieber mittels eines Werkzeuges, welches bereits mit den Deckschiebern und vorgewickelten Spulen bestückt ist, zusammen mit den Windungen in die Nut gepresst.

Es ist die Aufgabe der vorliegenden Erfindung, die Montage eines Deckschiebers gegenüber dem Stand der Technik zu vereinfachen.

Erfindungsgemäß geschieht dies mit einem Deckschieber der eingangs genannten Art wobei der Deckschieber an seinem, in Einbringungsrichtung vorderen Ende ein Einrastelement für einen Mitnehmer aufweist.

Das Einrastelement kann in vorteilhafter Weise als Ausnehmung in einem sich verjüngenden vorderen Bereich des Deckschiebers ausgebildet sein.

Eine ebenfalls vorteilhafte Variante des Einrastelementes kann durch Anbringung einer Falz am in Einbringungsrichtung vorderen Rand des Deckschiebers erhalten werden.

Mittels Werkzeug, das in das Einrastelement eingreift, wird nun die Einbringung des Deckschiebers vereinfacht. Dabei kann das Werkzeug sowohl bei einer manuellen, als auch bei einer automatisierten Montage verwendet werden.

Dazu weist das Werkzeug vorzugsweise einen drehbar gelagerten Grundkörper auf, aus dem ein Fortsatz als Mitnehmer herausragt, wobei ein Federelement vorgesehen ist, mittels welchem während des Einbringungsvorganges der Mitnehmer in der Weise gegen den Deckschieber gedrückt wird, dass bei einer Vorwärtsbewegung der Mitnehmer gegen das Einrastelement ragt.

Eine günstige Ausführungsform des Werkzeuges erhält man, wenn der drehbar gelagerte Grundkörper flächig ausgebildet ist und sein Umriss annähernd einer Glockenform entspricht und wenn aus dem Glockenboden ein rautenförmiger Fortsatz als Mitnehmer herausragt.

Vorteilhaft ist es weiterhin, wenn bei einem Verfahren zur Montage eines Deckschiebers in eine Nut eines Stators eines Elektromotors das vorderen Ende des Deckschiebers in eine zu verschließende Nut eines Stators eines Elektromotors eingefügt wird, wenn daraufhin das Werkzeug zur Montage eines Deckschiebers in der Weise auf der Mantelfläche des Stators positioniert wird, dass der Mitnehmer an das Einrastelement anliegt und wenn darauf das Werkzeug in Nutrichtung bewegt und damit der Deckschieber eingezogen wird.

Der erfindungsgemäße Deckschieber kann mit Hilfe des Werkzeuges auch bei einer voll automatisierten Fertigung eingebracht werden.

Die Erfindung wird durch in den Figuren dargestellte Ausführungsbeispiele näher erläutert.

Es zeigen beispielhaft:
Fig. 1 einen Schnitt durch einen Stator einer elektrischen Maschine;
Fig.2 eine erste Ausführungsform eines erfindungsgemäßen Deckschiebers;
Fig.3 eine zweite Ausführungsform eines erfindungsgemäßen Deckschiebers;
Fig.4 ein Beispiel eines Werkzeugs zur Montage eines erfindungsgemäßen Deckschiebers.

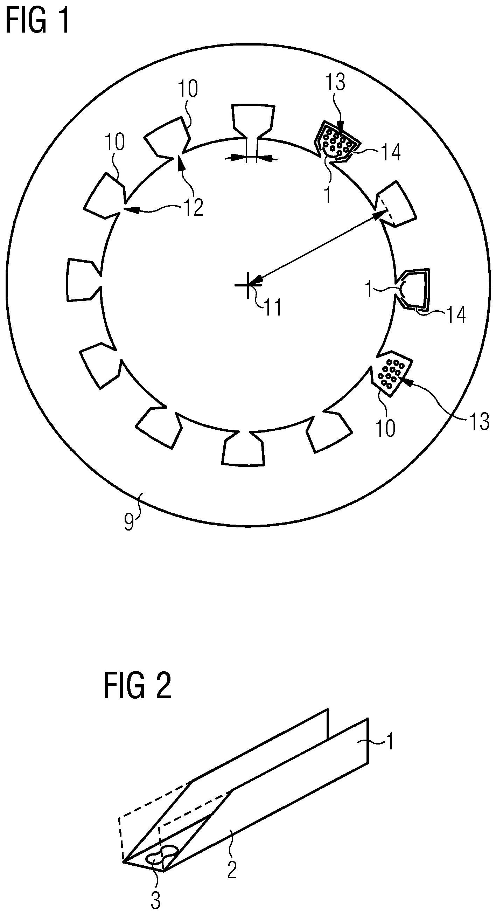

Wie in Fig. 1 dargestellt, weist der Stator 9 einer elektrischen Maschine eine Mehrzahl von Statornuten 10 auf. Die Statornuten 10 verlaufen parallel zur Rotationsachse 11 der elektrischen Maschine. Sie sind kreisförmig um die Rotationsachse 11 herum verteilt angeordnet. Zur Rotationsachse 11 hin - also nach radial innen hin - sind die Statornuten 10 offen. An ihrem der Rotationsachse 11 zugewandten Ende weisen die Statornuten 10 einen verjüngten Bereich 12 auf.

In den Statornuten 10 sind die Hauptabschnitte von Wicklungen 13 eines Statorwicklungssystems angeordnet.

Beim Einziehen der Wicklungen 13 in den Stator werden ebenfalls Flächenisolierstoffe mit in die Nuten eingebracht. Als Nutauskleidung dient hierbei ein sogenannter Nutkasten 14. Dabei handelt es sich um einen gefalzten Flächenisolierstoff, welcher mit seiner Querschnittsform an die Kontur der Nut 10 angepasst ist und an der Nutwandung anliegt.

Die Nutauskleidung bildet dabei eine zusätzliche flächige elektrische Barriere zwischen den Kupferwicklungen 13 aus Lackdraht und dem magnetisch leitfähigen Körper des Stators 9

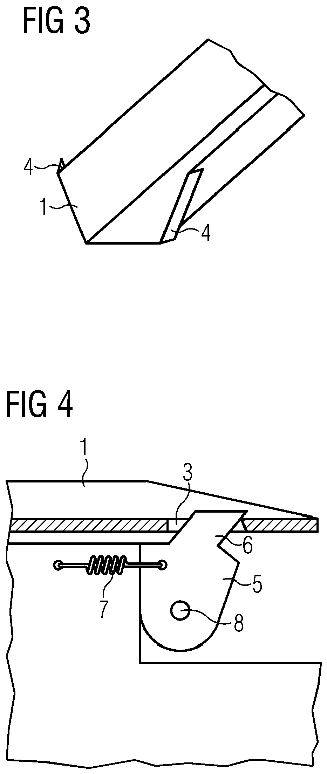

Nach dem Einzug der Wicklung wird der Nutschlitz mit einem Deckschieber 1 verschlossen, dessen beispielhafte und erfindungsgemäße Ausführungsformen anhand der Figuren 2 und4 näher beschrieben werden.

Der Deckschieber 1 gemäß Figur 2 ist in Längsrichtung als offenes Trapez aus einem Flächenisolierstoff gestaltet. Seine Abmessungen sind an die jeweils zu verschließende Nut angepasst.

Deckschieber können aus Materialien aller Isolierstoffklassen gefertigt werden. Ein Großteil der Deckschieber wird aus Polyesterfolie (Mylar, Hostaphan), DMD (Triflexil, Evitherm, Voltaflex, Flexiso), NMN (Triflexil, Trivoltherm, Isonom, Flexiso) sowie Nomex gefertigt.

An seinem in Einbringungsrichtung vorderen Ende weist der erfindungsgemäße Deckschieber eine Verjüngung 2 auf, die durch Abschrägung der Seitenflächen des Trapezes gebildet wird. In dem sich verjüngenden Bereich ist in der Grundseite des Trapezes eine Ausnehmung 3 als Einrastelement vorgesehen. Die Kontur der Ausnehmung kann beispielsweise der Zahl Acht entsprechen.

Wie aus der Fig. 4 ersichtlich, greift beim Montagevorgang, d.h. während der Deckschieber 1 in die Nut eines Stators eines Elektromotors eingezogen wird, der Mitnehmer 6 des Werkzeuges so in die Ausnehmung 3 ein, dass bei Bewegung des Werkzeuges eine Kraft in Einschubrichtung auf den Deckschieber 1 aufgebracht werden kann und die Bewegung des Werkzeuges eine entsprechende Bewegung des Deckschiebers 1 in der Nut bewirkt.

Das beispielhafte Werkzeug, wie es in Figur 4 dargestellt ist, weist einen Grundkörper 5, auf der an einem Drehpunkt 8 gelagert ist und mittels Federelement 7 während der Vorwärtsbewegung in einer Arbeitsstellung gehalten wird, in welcher der Mitnehmer 6 des Werkzeuges in die Ausnehmung 3 eingreift.

Wenn hingegen das Werkzeug eine Rückwärtsbewegung ausführt, d.h. wenn nach dem Einbringen des Deckschiebers 1 in die Nut das Werkzeug zurückgezogen wird, dann wird gegen die Federkraft der Mitnehmer aus der Ausnehmung 3 gezogen und gleitet auf der die Nut abschließenden Grundseite des Deckschiebers 1 in seine Ausgangsposition zurück, bevor mit dem Einbringungsvorgang für den nächsten Deckschieber 1 begonnen wird.

Als günstige Form für den Grundkörper 5 hat sich eine angenäherte Glockenform erwiesen, deren eine Seite während der Vorwärtsbewegung in einer Arbeitsstellung einen Anschlag bildet und in Verbindung mit dem Federelement 7 die Position des Mitnehmers 6 in der Ausnehmung 3 fixiert.

Dieser Mitnehmer 6 ragt vorzugsweise aus dem Glockenboden als rautenförmiger Fortsatz hervor, wobei in der Arbeitsstellung eine Seitenfläche der Raute parallel zur Grundseite des Deckschiebers 1 verläuft und zwei Seitenflächen der Raute in Einzugsrichtung einen Winkel von etwa 45° zur Grundseite des Deckschiebers 1 aufweisen.

Aus der Fig.3 ist eine zweite Ausführungsform eines erfindungsgemäßen Deckschiebers 1 ersichtlich. Bei dieser Version weist der Deckschieber 1 an seiner Vorderseite eine Falz 4 auf, mittels welcher eine Kante im Verlauf des Deckschiebers 1 geschaffen wird, welche als Einrastelement für den Mitnehmer während des Einbringungsvorganges dient.

Die Anbringung einer Falz 4 ist bei thermisch verformbaren Kunststoffen, d.h. Thermoplasten einfach durchführbar und stellt damit eine günstige Alternative zu der üblicherweise mittels Stanzwerkzeugen hergestellten Ausführungsform gemäß Fig. 1 vor.

Die erfindungsgemäßen Deckschieber ermöglichen insbesondere auch eine (teil)automatisierte Fertigung beispielsweise in Verbindung mit der automatisierten Montage von Wicklungen wie sie aus der WO 2020/058048 A1 bekannt ist. Dabei wird ein Wickelwerkzeug zur Montage einer Wicklung zusätzlich mit Deckschiebern und dem Werkzeug zur Montage eines Deckschiebers bestückt.

### Bezugszeichenliste

- 1: Deckschieber
- 2: Verjüngung
- 3: Ausnehmung
- 4: Falz
- 5: Grundkörper
- 6: Mitnehmer
- 7: Federelement
- 8: Drehpunkt des Werkzeuges
- 9: Stator
- 10: Statornuten
- 11: Rotationsachse
- 12: verjüngter Bereich der Statornut
- 13: Wicklungen
- 14: Nutkasten

## Patentansprüche

1. Deckschieber, insbesondere zum Verschluss einer Nut eines Stators eines Elektromotors, wobei der Deckschieber als offenes Trapez aus einem Flächenisolierstoff gefaltet ist, **dadurch gekennzeichnet, dass** der Deckschieber (1) an seinem, in Einbringungsrichtung vorderen Ende ein Einrastelement für einen Mitnehmer (6) aufweist.

2. Deckschieber nach Anspruch 1, **dadurch gekennzeichnet, dass** der Deckschieber (1) an seinem in Einbringungsrichtung vorderen Ende eine Verjüngung (2) aufweist und in dem sich verjüngenden Bereich eine Ausnehmung (3) als Einrastelement vorgesehen ist.

3. Deckschieber nach Anspruch 1, **dadurch gekennzeichnet, dass** der, in Einbringungsrichtung vordere Rand des Deckschiebers eine Falz (4) als Einrastelement für einen Mitnehmer (6) aufweist.

4. Werkzeug zur Montage eines Deckschiebers nach einem der Ansprüche 1 bis 3, **dadurch gekennzeichnet, dass** ein drehbar gelagerter Grundkörper (5) vorgesehen ist, dass aus dem Grundkörper ein Fortsatz als Mitnehmer (6) herausragt und dass ein Federelement (7) vorgesehen ist, mittels welchem während des Einbringungsvorganges der Mitnehmer (6) in der Weise gegen den Deckschieber (1) gedrückt wird, dass bei einer Vorwärtsbewegung der Mitnehmer (6) gegen das Einrastelement ragt.

5. Werkzeug nach Anspruch 4, **dadurch gekennzeichnet, dass** der drehbar gelagerte Grundkörper (5) flächig ausgebildet ist und sein Umriss annähernd einer Glockenform entspricht und dass aus dem Glockenboden ein rautenförmiger Fortsatz als Mitnehmer (6) herausragt.

6. Verfahren zur Montage eines Deckschiebers in eine Nut eines Stators eines Elektromotors, **dadurch gekennzeichnet, dass** das vorderen Ende des Deckschiebers (1) in eine zu verschließende Nut eines Stators eines Elektromotors eingefügt wird, dass daraufhin das Werkzeug zur Montage eines Deckschiebers in der Weise auf der Mantelfläche des Stators positioniert wird, dass der Mitnehmer (6) an das Einrastelement anliegt und dass darauf das Werkzeug in Nutrichtung bewegt und damit der Deckschieber (1) eingezogen wird.

7. Verfahren zur automatisierten Montage eines Deckschiebers in eine Nut eines Stators eines Elektromotors, **dadurch gekennzeichnet, dass** ein Wickelwerkzeug zur Montage einer Wicklung zusätzlich mit Deckschiebern und dem Werkzeug zur Montage eines Deckschiebers bestückt wird.
